# EUROPÄISCHE PATENTSCHRIFT

(11) **EP 3 874 246 B1**
(45) Veröffentlichungstag und Bekanntmachung des Hinweises auf die Patenterteilung: **17.04.2024**
(21) Anmeldenummer: 19795476.1
(22) Anmeldetag: 18.10.2019
(51) Int. Cl.: G01J 5/02, G01J 5/10, G01J 5/08, G08B 21/20, G01J 5/00, G01J 5/07, G08B 13/19

(54) **VERFAHREN ZUM BETRIEB EINER WÄRMEBILDKAMERA SOWIE WÄRMEBILDKAMERA**
METHOD FOR OPERATING A THERMAL IMAGING CAMERA, AND THERMAL IMAGING CAMERA
PROCÉDÉ POUR FAIRE FONCTIONNER UNE CAMÉRA THERMIQUE ET CAMÉRA THERMIQUE

(30) Priorität: 31.10.2018 DE 102018218726
(43) Veröffentlichungstag der Anmeldung: 08.09.2021
(73) Patentinhaber: Robert Bosch GmbH, 70442 Stuttgart (DE)
(72) Erfinder: FRANK, Michael, 75015 Bretten (DE); MEYER, Patrick, 70771 Leinfelden-Echterdingen (DE); RUMBERG, Axel, 76199 Karlsruhe (DE); UHLIG, Mike, 70567 Stuttgart (DE)
(86) Internationale Anmeldenummer: PCT/EP2019/078349
(87) Internationale Veröffentlichungsnummer: WO 2020/088951

(56) Entgegenhaltungen:
- DE-B3-102016 211 840
- DE-B4-102010 052 327
- KR-B1- 101 742 059
- US-A1- 2007 026 107
- US-A1- 2009 304 041

## Beschreibung

Die Erfindung betrifft ein Verfahren zum Betrieb einer Wärmebildkamera, wobei mittels einer Auswertevorrichtung eine zweidimensionale Information über eine Schimmelbildungsgefahr unter Verwendung eines Schimmelwachstumsmodells sowie unter Verwendung einer zweidimensionalen Temperaturinformation, einer Umgebungsluftfeuchteinformation und einer Umgebungslufttemperaturinformation berechnet wird.

### Stand der Technik

Aus dem Stand der Technik, beispielsweise aus EP 1 678 485 B1 sind Pyrometer zur Untersuchung eines Messobjekts bekannt, die mit einem Luftfeuchte- und Umgebungstemperatursensor ausgestattet sind, wobei basierend auf Messdaten dieser Sensoren ein Risiko einer möglichen Wasserkondensation an dem Messobjekt bewertet wird. Ein ähnliches Verfahren ist aus der DE 10 2010 052 327 B4 bekannt.

Aus DE 20 2005 015 397 U1 ist eine Vorrichtung zur Bestimmung der Oberflächenfeuchte eines Messobjekts bekannt, bei welcher mit einem Pyrometer eine Temperatur einer Wand gemessen wird, aus einer gemessenen Luftfeuchte eine Raum-Taupunkttemperatur bestimmt wird und aus der Wandtemperatur und der Raum-Taupunkttemperatur direkt eine Oberflächenfeuchte berechnet wird.

Darüber hinaus sind Frühwarnsysteme bekannt, beispielsweise aus DE 10 2014 107 690 A1, die ein Raumklima unter Verwendung von Luftfeuchte- und Umgebungstemperatursensoren kontinuierlich, insbesondere in gewissen Zeitintervallen, charakterisieren und ein Risiko von Schimmelbildung bewerten. Weitere Systeme werden in US 2009/304041 A1, KR 101 742 059 B1, DE 10 2016 211840 B3 und US 2007/026107 A1 beschrieben.

### Offenbarung der Erfindung

Die Erfindung geht aus von einer handgehaltenen Wärmebildkamera zur kontaktfreien Ermittlung einer zweidimensionalen Temperaturinformation einer Szenerie, insbesondere zur kontaktfreien Ermittlung eines Wärmebildes einer Szenerie. Die handgehaltene Wärmebildkamera ist zur kontaktfreien Ermittlung einer zweidimensionalen Information über eine Schimmelbildungsgefahr, insbesondere zur kontaktfreien Ermittlung einer Schimmelrisikokarte der Szenerie, gemäß erfindungsgemäßem Verfahren vorgesehen.

Die handgehaltene Wärmebildkamera weist zumindest ein Infrarot-Detektorarray auf, das aus einer Vielzahl von für Infrarotstrahlung empfindlichen Pixeln besteht. Eine Auswertevorrichtung der Wärmebildkamera ist dazu vorgesehen, die zweidimensionale Information über eine Schimmelbildungsgefahr, insbesondere die Schimmelrisikokarte der Szenerie, unter Verwendung eines Schimmelwachstumsmodells sowie unter Verwendung einer zweidimensionalen Temperaturinformation, einer Umgebungsluftfeuchteinformation und einer Umgebungslufttemperaturinformation unter Anwendung des erfindungsgemäßen Verfahrens zu berechnen.

"Wärmebildkamera" bezeichnet eine Vorrichtung zum kontaktfreien Vermessen einer zweidimensionalen Temperaturinformation einer Szenerie unter Ausgabe zumindest einer die zweidimensionale Temperaturinformation betreffenden Information, beispielsweise unter Ausgabe einer oder mehrerer Temperaturangaben, vorteilhaft zweier oder mehrerer Temperaturmesswerte, einer Temperaturverteilung oder dergleichen. Typischerweise ist diese zweidimensionale Temperaturinformation in Form eines aus einer Vielzahl von ortsaufgelösten und/oder raumwinkelaufgelösten Temperaturmesswerten zusammengesetzten Wärmebilds realisiert.

Unter einer "handgehaltenen" Wärmebildkamera soll insbesondere verstanden werden, dass die Wärmebildkamera ohne Zuhilfenahme einer Transportmaschine lediglich mit den Händen, insbesondere mit einer Hand, transportiert werden kann. Insbesondere kann die Wärmebildkamera auch während eines Messvorgangs in einer von einem Bediener der Wärmebildkamera frei ausgeführten Bewegung handgehalten durch den Raum geführt werden. Die Masse der handgehaltenen Wärmebildkamera beträgt insbesondere weniger als 5 kg, vorteilhaft weniger als 3 kg und besonders vorteilhaft weniger als 1 kg. Vorzugsweise weist die handgehaltene Wärmebildkamera ein Gehäuse mit einem Griff oder einem Griffbereich auf, mit dem die Wärmebildkamera durch einen Bediener geführt werden kann.

Die handgehaltene Wärmebildkamera weist in einer Ausführungsform ein Gehäuse auf, das zumindest die wesentlichen funktionalen Komponenten der Wärmebildkamera aufnimmt. Insbesondere nimmt das Gehäuse zumindest eine Steuervorrichtung, ein Infrarot-Detektorarray, eine Eingabe- und/oder eine Ausgabevorrichtung, insbesondere eine Anzeigevorrichtung wie einen Bildschirm oder dergleichen, sowie eine Energieversorgungsvorrichtung auf. Bevorzugt nimmt das Gehäuse ebenfalls die Auswertevorrichtung auf. Insbesondere sind die Komponenten in ihrem Gesamtvolumen zu mehr als 50 %, bevorzugt zu mehr als 75 % und besonders bevorzugt zu 100 % in dem Gehäuse der Wärmebildkamera untergebracht. Auf diese Weise kann eine besonders kompakte und leicht einhändig durch einen Bediener führbare Wärmebildkamera realisiert werden. Ferner lassen sich die Komponenten der Wärmebildkamera auf diese Weise vorteilhaft durch ein Gehäuse der Wärmebildkamera vor Beschädigungen und Umwelteinflüssen, beispielsweise vor dem Eindringen von Feuchtigkeit und Staub, schützen.

Unter einer "Ausgabevorrichtung" soll zumindest ein Mittel verstanden werden, das dazu vorgesehen ist, zumindest eine wechselnde Information akustisch, optisch und/oder taktil an einen Bediener auszugeben. Die Ausgabevorrichtung dient der Ausgabe zumindest derjenigen Informationen an den Bediener der Wärmebildkamera, die unter Verwendung der Wärmebildkamera erhalten werden. Insbesondere kann mittels der Ausgabevorrichtung ein Ergebnis der Messung und Auswertung ausgegeben werden. Die Ausgabe kann dabei insbesondere mittels eines Bildschirms, insbesondere eines berührungssensitiven Bildschirms, realisiert werden. Die Ausgabevorrichtung ist in einer Ausführungsform der Wärmebildkamera im Gehäuse der Wärmebildkamera untergebracht. Ferner können auszugebende Informationen oder Ergebnisse auch an die Steuervorrichtung und/oder, insbesondere zur Erhöhung des Nutzerkomforts, an ein Daten verarbeitendes System ausgegeben werden. Letzteres umfasst zumindest eine Ausgabe einer Information an ein externes Gerät wie ein Smartphone, ein Tablet-PC, ein PC sowie an ein anderes, einem Fachmann als sinnvoll erscheinendes externes Datengerät, das über eine Datenkommunikationsschnittstelle der Wärmebildkamera mit dieser verbunden ist. Insbesondere kann die Ausgabevorrichtung direkt im Gehäuse der Wärmebildkamera untergebracht sein und kann zusätzlich auch über externe Ausgabevorrichtungen ergänzt werden. Unter Verwendung der mittels der Ausgabevorrichtung an einen Bediener der Wärmebildkamera ausgegeben Information ist es dem Bediener der Wärmebildkamera möglich, nach Durchführung einer Messung und Auswertung zu einem intuitiv verständlichen Ergebnis zu gelangen.

Die Wärmebildkamera ist dazu eingerichtet, zur kontaktfreien Ermittlung einer zweidimensionalen Temperaturinformation der Szenerie, insbesondere zur kontaktfreien Ermittlung eines Wärmebildes der Szenerie, in einem Raumwinkelbereich von der Szenerie abgestrahlte Infrarotstrahlung zu detektieren. Es sei darauf hingewiesen, dass im Rahmen dieser Schrift der Begriff "Infrarotstrahlung" synonym zu verstehen ist zu Wärmestrahlung. Unter dem Raumwinkelbereich - auch als "Messbereich" bezeichenbar - wird ein geometrischer, lokal begrenzter Bereich verstanden, der zumindest einen Ausschnitt der zu untersuchenden Szenerie umfasst, deren Infrarotstrahlung den Gegenstand oder die Gegenstände der Szenerie in Richtung der Wärmebildkamera verlässt und von der Wärmebildkamera zumindest teilweise erfasst wird. Typsicherweise wird der Raumwinkelbereich durch die Eintrittsöffnung der Wärmebildkamera bzw. durch die optischen Eigenschaften der Wärmebildkamera definiert (beispielsweise durch Zoom, Winkelabdeckung, Öffnungswinkel, etc.).

Zum Messen von Infrarotstrahlung weist die Wärmebildkamera zumindest ein Infrarot-Detektorarray auf. Das Infrarot-Detektorarray weist eine Vielzahl von für Infrarotstrahlung empfindlichen Pixeln auf. Das Infrarot-Detektorarray erfasst in dem Raumwinkelbereich abgestrahlte und auf dessen Oberfläche projizierte Infrarotstrahlung und erzeugt basierend auf der detektierten Intensität einfallender Infrarotstrahlung ein Detektionssignal. Das Infrarot-Detektorarray weist an einer der Szenerie zugewandten Oberfläche eine zweidimensionale Detektionsfläche auf, auf der die Vielzahl für Infrarotstrahlung empfindlicher Pixel angeordnet ist. Jedes der Pixel des Infrarot-Detektorarrays kann dabei - Beleuchtung mittels Infrarotstrahlung vorausgesetzt - eine Bildinformation ermitteln und daraus ein Detektionssignal erzeugen. Das von jedem Pixel bereitgestellte Detektionssignal kann anschließend zur Bestimmung einer Temperaturinformation herangezogen werden. Insbesondere kann das Detektionssignal eines jeden Pixels an die Steuervorrichtung der Wärmebildkamera weitergeleitet werden. Von der Steuervorrichtung kann das Detektionssignal einzeln und/oder in Kombination mit Detektionssignalen anderer Pixel ausgewertet werden.

Jedes Pixel des Infrarot-Detektorarrays stellt ein für Infrarotstrahlung empfindliches Element dar und ist dazu vorgesehen, Strahlung aus dem Infrarotbereich, insbesondere aus dem mittleren Infrarotbereich im Wellenlängenbereich zwischen 3 µm und 50 µm, zu erfassen und in ein Detektionssignal, insbesondere ein elektrisches Detektionssignal, umzuwandeln. Typischerweise sind die von derartigen strahlungsempfindlichen Elementen erzeugten Detektionssignale abhängig von einer auf dem jeweiligen Element auftreffenden Infrarotstrahlungsintensität. Beispiele derartiger für Infrarotstrahlung empfindlicher Elemente sind unter anderem Fotodioden, Bolometer, pyroelektrische Sensoren, P/N-Dioden, PIN-Dioden, Avalanche Photo Dioden (APD), (modulierte) CCD-Chips und CMOS-Pixel, allerdings können aber auch andere, einem Fachmann sinnvoll erscheinende für Infrarotstrahlung empfindliche Elemente verstanden werden.

In einer Ausführungsform der Wärmebildkamera ist die Vielzahl von Pixeln Matrix-artig an der der Szenerie zugewandten Oberfläche des Infrarot-Detektorarrays angeordnet. Die Anzahl Pixel beträgt beispielsweise 80×80 Pixel, bevorzugt 360x240 Pixel, besonders bevorzugt 640×480 Pixel. Die Anzahl Pixel definiert die Auflösung der Wärmebildkamera, d.h. insbesondere die Auflösung einer mittels der Wärmebildkamera gemessenen zweidimensionalen Temperaturinformation. Durch die Matrix-artige Anordnung kann eine besonders homogene und insbesondere lückenlose Erfassung von Infrarotstrahlung aus dem Raumwinkelbereich erfolgen, da das Infrarot-Detektorarray homogen und insbesondere lückenlos mit Pixeln versehen ist.

Jedes der Pixel des Infrarot-Detektorarrays ist mit der Steuervorrichtung direkt oder indirekt über weitere zwischengeschaltete Bauelemente signaltechnisch verbindbar. Insbesondere kann eine indirekte signaltechnische Verbindung der Pixel mit der Steuervorrichtung auch über Schaltelemente, beispielsweise Multiplexer oder andere Selektionsschaltungen, die dazu ausgelegt sind, Detektionssignale mehrerer Pixel selektiv weiterzuleiten, realisiert werden. Auf diese Weise kann insbesondere erreicht werden, dass Detektionssignale einzelner Pixel oder einer Gruppe von Pixeln unabhängig von Detektionssignalen anderer Pixel an die Steuervorrichtung weitergeleitetet und von dieser ausgewertet werden können.

Die Steuervorrichtung dient der Steuerung, insbesondere dem Betrieb, der Wärmebildkamera. Die Steuervorrichtung ist zumindest dazu vorgesehen, von dem Infrarot-Detektorarray erzeugte Detektionssignale, insbesondere von den mit der Steuervorrichtung signaltechnisch verbindbaren Pixeln, zu empfangen, auszuwerten und basierend auf Detektionssignalen zumindest einer Mehrzahl beleuchteter Pixel des Infrarot-Detektorarrays eine Auswertung der zweidimensionalen Temperaturinformation der Szenerie durchzuführen. Insbesondere ist die Steuervorrichtung dazu vorgesehen, basierend auf Detektionssignalen zumindest einer Mehrzahl beleuchteter Pixel, eine Auswertung eines Wärmebilds durchzuführen. Auf diese Weise dient die Steuervorrichtung der "Ermittlung einer zweidimensionalen Temperaturinformation, insbesondere eines Wärmebildes, aus gemessener Infrarotstrahlung". Die ausgewertete zweidimensionale Temperaturinformation, insbesondere ein Wärmebild, kann von der Steuervorrichtung zur weiteren Verarbeitung und/oder Ausgabe einem Bediener der Wärmebildkamera mittels der Ausgabevorrichtung und/oder einem externen Gerät mittels einer Datenkommunikationsschnittstelle der Wärmebildkamera bereitgestellt werden.

Unter "vorgesehen" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Unter der "Auswertevorrichtung" soll insbesondere eine Vorrichtung verstanden werden, die zumindest einen Informationseingang, eine Informationsverarbeitungseinheit zur Bearbeitung sowie eine Informationsausgabe zur Weitergabe der bearbeiteten und/oder ausgewerteten Auswerteinformationen aufweist. Vorteilhaft weist die Auswertevorrichtung Komponenten auf, die zumindest einen Prozessor, einen Speicher und ein Betriebsprogramm mit Auswerte- und Berechnungsroutinen umfassen. In einer Ausführungsform können die elektronischen Bauteile der Auswertevorrichtung auf einer Platine oder Leiterplatte der Wärmebildkamera angeordnet sein, bevorzugt auf einer gemeinsamen Platine mit der Steuervorrichtung der Wärmebildkamera zur Steuerung der Wärmebildkamera. Des Weiteren können die Steuervorrichtung und die Auswertevorrichtung der Wärmebildkamera auch als ein einzelnes Bauteil ausgeführt sein, beispielsweise in Form eines Mikrokontrollers. Die Auswertevorrichtung ist dazu vorgesehen, die zweidimensionale Information über eine Schimmelbildungsgefahr, insbesondere die Schimmelrisikokarte der Szenerie, unter Verwendung eines Schimmelwachstumsmodells sowie unter Verwendung der zweidimensionalen Temperaturinformation, der Umgebungsluftfeuchteinformation und der Umgebungslufttemperaturinformation zu berechnen. Entsprechend ist die Auswertevorrichtung speziell dazu eingerichtet und vorgesehen, die zweidimensionale Information über eine Schimmelbildungsgefahr, insbesondere die Schimmelrisikokarte der Szenerie, zu berechnen. Dazu weist die Auswertevorrichtung speziell vorgehaltene Routinen und/oder Algorithmen, insbesondere Routinen und/oder Algorithmen zur Modellierung eines Schimmelwachstums, auf. Das Schimmelwachstumsmodell, d.h. entsprechende Funktionen, Routinen, Algorithmen, Datenbanken, Tabelle oder dergleichen, kann dabei geräteintern vorgehalten, insbesondere gespeichert sein, oder von einem externen Gerät während der Auswertung bereitgestellt werden.

Unter einem "Schimmelwachstumsmodell" ist insbesondere ein Berechnungsmodell zu verstehen, das basierend auf biologischen, biohygrothermischen, physikalischen, chemischen oder auch empirischen Erkenntnissen erlaubt, eine Schimmelbildung zu charakterisieren, insbesondere zu prognostizieren, und somit eine Information über eine Schimmelbildungsgefahr auszuwerten. Insbesondere kann derart eine Information über eine Schimmelbildungsgefahr betreffend die untersuchte Szenerie ermittelt und bewertet werden. Beispiele derartiger Schimmelwachstumsmodelle sind das Isoplethenmodell oder das Viitanen-Modell, die einem Fachmann aus dem Stand er Technik bekannt sind (beispielsweise aus Sedlbauer, Vorhersage von Schimmelpilzbildung auf und in Bauteilen, Dissertation Universität Stuttgart, 2001 oder Viitanen et al., Mould growth in pine and spruce sapewood in relation to air humidity and temperature, Uppsala, Swedish University of Agriculture Sciences, Department of Forest Products, 1991). Insbesondere stellen derartige Modelle Berechnungsverfahren dar, um für instationäre Randbedingungen das Wachstumsrisiko von Schimmelpilzen auf Oberflächen der untersuchen Szenerie zu beurteilen. Erfindungsgemäß kann auf diese Weise eine besonders präzise und verlässliche Information bezüglich der Schimmelbildungsgefahr ausgegeben werden. Insbesondere wird die Information bezüglich der Schimmelbildungsgefahr somit basierend auf den jeweils während eines Messszenarios vorliegenden biologischen Wachstumseigenschaften von Schimmelpilzen, Messwerten von Umgebungslufttemperatur, Umgebungsluftfeuchte und Oberflächentemperatur der Szenerie berechnet.

Die beschriebene Wärmebildkamera dient als Grundlage für das im Folgenden beschriebene Verfahren. Insbesondere ist die Auswertevorrichtung der Wärmebildkamera zur Durchführung des vorgeschlagenen Verfahrens ausgebildet und vorgesehen. Das Verfahren zum Betrieb der Wärmebildkamera geht von der vorgestellten Wärmebildkamera aus und weist zumindest die Verfahrensschritte des Anspruchs 1 auf.

Unter einer "Umgebungslufttemperaturinformation" wird insbesondere eine die die Wärmebildkamera umgebende Temperatur betreffende Information, also beispielsweise die Temperatur im räumlichen Umfeld der Wärmebildkamera, verstanden. Wird die Wärmebildkamera beispielsweise in einem geschlossenen Raum verwendet, so entspricht die Umgebungslufttemperatur bevorzugt der Raumtemperatur. Wird die Wärmebildkamera hingegen auf einem freien Feld benutzt, so wäre die Umgebungslufttemperatur die Außentemperatur im Bereich der Wärmebildkamera. Unter einer "Umgebungsluftfeuchteinformation" ist äquivalent eine Information betreffend einen relativen oder absoluten Feuchtegehalt der die Wärmebildkamera umgebenden Luft zu verstehen.

Unter "Bereitstellen einer Umgebungsluftfeuchteinformation und/oder einer Umgebungslufttemperaturinformation" ist insbesondere zu verstehen, dass der Auswertevorrichtung, die das erfindungsgemäße Verfahren durchführt, eine entsprechende Information bereitgestellt wird. In einer Ausführungsform des Verfahrens wird die Umgebungsluftfeuchteinformation und/oder die Umgebungslufttemperaturinformation durch einen Bediener bereitgestellt. Das Bereitstellen kann dabei insbesondere durch eine Eingabe oder Auswahl durch einen Bediener, beispielsweise mittels einer Eingabevorrichtung oder mittels einer Menüauswahl oder dergleichen, erfolgen. Derart kann eine besonders kompakte und aus wenigen Komponenten bestehende Wärmebildkamera angegeben werden. In einer alternativen oder zusätzlichen Ausführungsform des Verfahrens wird die Umgebungsluftfeuchteinformation und/oder die Umgebungslufttemperaturinformation mittels einer in die oder an der Wärmebildkamera angeordneten Sensorik zur Bestimmung einer Umgebungsluftfeuchteinformation und/oder einer Umgebungslufttemperaturinformation bereitgestellt, insbesondere gemessen. Entsprechend weist die handgehaltene Wärmebildkamera eine in die Wärmebildkamera integrierte oder an der Wärmebildkamera angeordnete Sensorik zur Bestimmung der Umgebungsluftfeuchteinformation und/oder der Umgebungslufttemperaturinformation auf. Durch das Messen der Umgebungsluftfeuchteinformation und/oder einer Umgebungslufttemperaturinformation kann eine besonders präzise und zuverlässige Bestimmung dieser Informationen realisiert werden. Insbesondere können derart an ein Messszenario angepasste Informationen zur Durchführung des Verfahrens bereitgestellt werden. Ferner können Fehleingaben, insbesondere durch Abweichungen von einer tatsächlich vorliegenden Umgebungsluftfeuchteinformation und/oder Umgebungslufttemperaturinformation vermieden werden. In einer wiederum alternativen oder zusätzlichen Ausführungsform des Verfahrens wird die Umgebungsluftfeuchteinformation und/oder die Umgebungslufttemperaturinformation mittels einer zu der Wärmebildkamera externen Sensorik zur Bestimmung einer Umgebungsluftfeuchteinformation und/oder die Umgebungslufttemperaturinformation bereitgestellt, insbesondere gemessen und übertragen. Durch Bereitstellen der Umgebungsluftfeuchteinformation und/oder der Umgebungslufttemperaturinformation mittels externer Sensorik lässt sich das Risiko von ungenauen Messungen oder Fehlmessungen, beispielsweise in Folge einer nicht mit der Umgebung akklimatisierten Wärmebildkamera, verringern oder vorteilhaft gänzlich vermeiden. Insbesondere kann ferner vorgesehen sein, Informationen, die von einer internen Sensorik und einer externen Sensorik bereitgestellt werden, abzugleichen und den Bediener der Wärmebildkamera auf die Gefahr einer ungenauen Messung hinzuweisen, sollten die Informationen um eine bestimmte Schwelle voneinander abweichen. Alternativ oder zusätzlich kann zumindest eine Umgebungsluftfeuchteinformation und/oder eine Umgebungslufttemperaturinformation zu Korrektur- und/oder Kalibrierzwecken der Wärmebildkamera verwenden werden.

Unter der Sensorik ist insbesondere zumindest ein Sensor zum Messen einer absoluten und/oder relativen Luftfeuchte und/oder einer Umgebungstemperatur der den Sensor umgebenden Luft zu verstehen. Der zumindest eine Sensor ist dazu vorgesehen, die Umgebungsluftfeuchteinformation und/oder der Umgebungslufttemperaturinformation als Ausgangssignal bereitzustellen. Im Falle einer in die oder an der Wärmebildkamera angeordneten Sensorik zur Bestimmung einer Umgebungsluftfeuchteinformation und/oder einer Umgebungslufttemperaturinformation ist der zumindest eine Sensor entsprechend in oder an der Wärmebildkamera angeordnet und signaltechnisch mit der Steuervorrichtung und/oder der Auswertevorrichtung verbunden oder zumindest in einem Betriebszustand verbindbar (beispielsweise kabelgebunden oder kabelungebunden). In der Ausführungsform der Wärmebildkamera, in der die Sensorik extern zu der Wärmebildkamera realisiert ist, weist die Wärmebildkamera eine Datenkommunikationsschnittstelle zur Übertagung zumindest der Umgebungsluftfeuchteinformation und/oder der Umgebungslufttemperaturinformation von der externen Sensorik auf. Unter der Datenkommunikationsschnittstelle soll insbesondere ein Mittel verstanden werden, das dazu vorgesehen ist, zumindest eine Information von der externen Sensorik anzunehmen und an die Steuervorrichtung und/oder die Auswertevorrichtung weiterzuleiten. Die Datenkommunikationsschnittstelle ist insbesondere zur Herstellung einer Verbindung zu einem externen Gerät vorgesehen, beispielsweise einem Smartphone, einem Tablet-PC, einem PC, einem Thermometer, einem Daten-Logger oder dergleichen. Somit ermöglicht die Datenkommunikationsschnittstelle die Bereitstellung einer

Umgebungsluftfeuchteinformation und/oder der Umgebungslufttemperaturinformation von der mit der Datenkommunikationsschnittstelle verbundenen externen Sensorik. Insbesondere kann die Datenkommunikationsschnittstelle als eine zur insbesondere drahtlosen Kommunikation vorgesehene Schnittstelle realisiert sein, mittels der die Wärmebildkamera Daten austauschen kann, insbesondere Arbeitsparameter senden und/oder empfangen kann. Die Datenkommunikationsschnittstelle ist signaltechnisch zumindest an die Steuervorrichtung und/oder die Auswertevorrichtung der Wärmebildkamera angebunden. Bevorzugt verwendet die Datenkommunikationsschnittstelle ein standardisiertes Kommunikationsprotokoll zu einer Übertragung von elektronischen, insbesondere digitalen Daten. Vorteilhaft umfasst die Datenkommunikationsschnittstelle eine drahtlose Schnittstelle, insbesondere beispielsweise eine WLAN-, Bluetooth-, Infrarot-, NFC-, RFID-, GSM-, UMTS- und/oder LTE-Schnittstelle oder eine andere, einem Fachmann als sinnvoll erscheinende, drahtlose Schnittstelle. Alternativ oder zusätzlich kann die Datenkommunikationsschnittstelle auch einen kabelgebunden Adapter aufweisen, beispielsweise einen USB- oder Mikro-USB-Adapter.

In einer Ausführungsform des Verfahrens wird die Umgebungsluftfeuchteinformation und/oder die Umgebungslufttemperaturinformation aus einer Langzeitmessung der Umgebungsluftfeuchte und/oder der Umgebungslufttemperatur ermittelt und bereitgestellt. Entsprechend ist Auswertevorrichtung dazu vorgesehen, über einen längeren Zeitraum ermittelte Messwerte für die Umgebungsluftfeuchte des Raumes und/oder Messwerte für die Umgebungslufttemperatur des Raumes aufzunehmen und diese unter Verwendung von Berechnungsmodellen, insbesondere unter Verwendung von Schimmelwachstumsmodellen, zu analysieren und auszuwerten. In einem Ausführungsbeispiel können insbesondere die Mittelwerte einer Langzeitmessung der Umgebungsluftfeuchte und/oder der Umgebungslufttemperatur als Umgebungsluftfeuchteinformation bzw. als Umgebungslufttemperaturinformation für die Durchführung des Verfahrens verwendet werden. In einem alternativen Ausführungsbeispiel können auch während einer Langzeitmessung ermittelte maximale Werte der Umgebungsluftfeuchte und/oder der Umgebungslufttemperatur als Umgebungsluftfeuchteinformation bzw. als Umgebungslufttemperaturinformation für die Durchführung des Verfahrens verwendet werden oder dergleichen. Somit können auf besonders einfache Weise über einen längeren Zeitraum hinweg Messwerte aufgenommen werden, die vorteilhaft zur Auswertung der Schimmelbildungsgefahr verwendet werden können. Die Messwerte können dabei kontinuierlich und/oder in Intervallen ermittelt und der Auswertevorrichtung zur Auswertung zur Verfügung gestellt werden. Ferner können die Messwerte auch gespeichert werden. Unter Anwendung eines Schimmelwachstumsmodells, beispielsweise des Isoplethenmodells oder eines physikalischen Modells einer Schimmelspore, kann mittels der Auswertevorrichtung dann eine besonders zuverlässige Information hinsichtlich der Schimmelbildungsgefahr ausgewertet werden. Insbesondere kann die Schimmelbildungsgefahr auf der untersuchten Oberfläche der Szenerie besonders zuverlässig bewertet werden. Dabei wir vorteilhaft nicht nur eine zu einem gegebenen Zeitpunkt vorliegende "Ist-Situation" bewertet, sondern auch auf bereits aufgenommen Messwerte zurückgegriffen. Auf diese Weise kann eine besonders präzise und verlässliche Information bezüglich der Schimmelbildungsgefahr ausgegeben werden. Insbesondere berücksichtigt die Information bezüglich der Schimmelbildungsgefahr eine über einen längeren Zeitraum ermittelte Entwicklung der ermittelten Information zur Umgebungsluftfeuchte und/oder zur Umgebungslufttemperatur des Raumes. Insbesondere wird somit möglich, kurzzeitige Schwankungen in der Umgebungsluftfeuchte und/oder der Umgebungslufttemperatur auszugleichen (beispielsweise eine hohe Umgebungsluftfeuchte durch Duschen). Es sei angemerkt, dass eine Langzeitmessung der Umgebungsluftfeuchte und/oder der Umgebungslufttemperatur sowohl mittels in die Wärmebildkamera oder an der Wärmebildkamera angeordneter (interner) Sensorik als auch mittels zur Wärmebildkamera externer Sensorik durchführbar ist. Im Falle externe Sensorik kann diese für einen längeren Zeitraum in der zu vermessenden Umgebung positioniert werden, beispielsweise an einer zu untersuchenden Oberfläche. Die Messwerte werden dort beispielsweise zunächst gesammelt und anschließend zur Auswertung an die Wärmebildkamera übertragen. Im Falle interner Sensorik kann auch die Wärmebildkamera selbst für einen längeren Zeitraum in der zu vermessenden Umgebung positioniert sein, beispielsweise auf einem Stativ. Derart führt die Wärmebildkamera selbst die Langzeitmessung der Umgebungsluftfeuchte und/oder der Umgebungslufttemperatur durch.

Unter "berechnen einer zweidimensionale Information über eine Schimmelbildungsgefahr unter Verwendung eines Schimmelwachstumsmodells sowie unter Verwendung der zweidimensionalen Temperaturinformation, der Umgebungsluftfeuchteinformation und der Umgebungslufttemperaturinformation" ist zu verstehen, dass mittels der Auswertevorrichtung unter Anwendung von Auswerteroutinen, Auswertealgorithmen, Auswertefunktionen oder dergleichen, insbesondere auch mittels Datenbankabfragen, die das Schimmelwachstumsmodell berücksichtigen und/oder mathematisch wiedergeben, eine zweidimensionale Information ermittelt wird, die eine Aussage über eine Schimmelbildungsgefahr zulässt. Das Schimmelwachstumsmodell, d.h. insbesondere die Funktionen, Routinen, Algorithmen, Tabellen, Matrizen oder dergleichen, können dabei geräteintern in einer Datenbank auf einer Speichereinheit, insbesondere einer Speichereinheit der Steuervorrichtung der Wärmebildkamera, gespeichert sein. In einer alternativen oder zusätzlichen Ausführungsform das Schimmelwachstumsmodell auch in einer externen, insbesondere geräteexternen, vorteilhaft stets aktuellen, Datenbank gespeichert sein. Beispielsweise kann das Schimmelwachstumsmodell in einer Datenbank auf einem Computer, einem Server oder auf einem anderen, einem Fachmann sinnvoll erscheinenden Datenspeicher und/oder Datenverarbeitungsgerät gespeichert sein und von diesem bei Durchführung des erfindungsgemäßen Verfahrens bereitgestellt werden. Insbesondere kann die Bereitstellung des Schimmelwachstumsmodells auch über einen Internetzugang der Wärmebildkamera erfolgen.

Gegenüber aus dem Stand der Technik bekannten Verfahren, die eine Oberflächentemperatur mit einer Taupunkttemperatur einer Umgebung vergleichen, wird durch erfindungsgemäßes Verfahren berücksichtigt, dass Schimmelpilzbildung bei Feuchten erfolgen kann, die noch weit von einem Zustand einer Feuchtesättigung entfernt sind. Insbesondere wird bei aus dem Stand der Technik bekannten Verfahren lediglich ein Kondensationsrisiko ermittelt, nicht jedoch eine konkret auf eine Schimmelbildungsgefahr bezogene Information. Somit erlaubt es vorliegende Erfindung, einem Bediener der Wärmebildkamera präzisere und belastbarere Informationen bzgl. eines Schimmelbildungsrisikos zu liefern und somit einen Bediener der Wärmebildkamera noch effektiver und zuverlässiger vor Schimmelbildung in Räumen und/oder an Wänden und/oder Oberflächen zu schützen.

Erfindungsgemäß wird in einem weiteren Verfahrensschritt das zu verwendende Schimmelwachstumsmodell durch einen Bediener spezifiziert. Auf diese Weise kann das zur Auswertung heranzuziehende Schimmelwachstumsmodell von einem Bediener der Wärmebildkamera entsprechend seines Interesses und/oder an eine Umgebung angepasst ausgewählt werden. Insbesondere kann das Schimmelwachstumsmodell in Folge einer Eingabe oder Auswahl durch einen Bediener, beispielsweise mittels einer Eingabevorrichtung oder mittels einer Menüauswahl oder dergleichen, spezifiziert werden. In einem Ausführungsbeispiel kann ein Bediener beispielsweise zwischen einem Isoplethenmodell und einem Viitanen-Modell wählen. Durch die Spezifizierung des zu verwendenden Schimmelwachstumsmodells lassen sich eine Informationsverarbeitung, insbesondere die zur Auswertung mittels der Auswertevorrichtung verwendeten Funktionen, Routinen, Algorithmen, Tabellen, Matrizen oder dergleichen, vorteilhaft anpassen.

In einer Ausführungsform des Verfahrens wird in einem weiteren Verfahrensschritt eine Schimmelwarnschwelle durch einen Bediener spezifiziert. Insbesondere kann somit eine Sensitivität der Wärmebildkamera eingestellt werden, mit der ein Schimmelbildungsrisiko ermittelt, d.h. berechnet und/oder ausgegeben, wird. Vorteilhaft kann derart die Wärmebildkamera an eine zu untersuchende Umgebung angepasst werden, sodass beispielsweise in einem Badezimmer auf Grund der generell höheren Luftfeuchte eine andere Sensitivität verwendet werden kann als beispielsweise in einem Wohnbereich. Insbesondere ist denkbar, die Schimmelwarnschwelle aus einer vordefinierten Skala für eine "Schimmelrisikotoleranz" zu wählen, beispielsweise untergliedert nach hoher Schimmelrisikotoleranz (bei den ermittelten und ausgegebenen Informationen über ein Schimmelbildungsrisiko handelt es sich lediglich um solche Bereiche der Szenerie, die ein hohes hohes Schimmelbildungsrisiko aufweisen), mittlerer Schimmelrisikotoleranz (bei den ermittelten und ausgegebenen Informationen über ein Schimmelbildungsrisiko handelt es sich um solche Bereiche der Szenerie, die ein mittleres Schimmelbildungsrisiko aufweisen) und geringe Schimmelrisikotoleranz (bei den ermittelten und ausgegebenen Informationen über ein Schimmelbildungsrisiko handelt es sich um solche Bereiche der Szenerie, die bereits ein geringes Schimmelbildungsrisiko aufweisen). Insbesondere können diese Bereiche in einer farblichen Darstellung einer mittels der Wärmebildkamera ausgegebenen Schimmelrisikokarte auch als unterschiedlich eingefärbte Bereiche (z.B. rot für hohes Schimmelbildungsrisiko, gelb für mitteleres Schimmelbildungsrisiko und grün für geringes Schimmelbildungsrisiko) wiedergegeben werden. Insbesondere unter Verwendung eines Isoplethenmodells erfolgt die Berechnung der zweidimensionalen Information über ein Schimmelbildungsrisiko durch Berechnung einer Sporenauskeimungszeit oder eines zu erwartende Myzelwachstums in Abhängigkeit von den Eingangsgrößen der zweidimensionalen Temperaturinformation, der Umgebungsluftfeuchteinformation und der Umgebungslufttemperaturinformation. Dabei kann beispielsweise zwischen mehreren Isoplethensystemen - die jeweils Schimmelwachstum hinsichtlich unterschiedlicher Gefährdungsklassen, verschiedener Substrattypen, zeitabhängiger Verläufe oder dergleichen charakterisieren - unterschieden werden. Die geringste Iso-Linie ("LIM" genannt) stellt dabei diejenige Kennlinie dar, bei deren Unterschreitung hin zu geringeren Feuchten gar keine biologische Aktivität (d.h. kein Schimmelwachstum) mehr auftritt. Derart kann beispielsweise über die Auswahl oder Vorgabe einer Iso-Linie eine Schimmelwarnschwelle spezifiziert werden.

In einer Ausführungsform des Verfahrens wird in einem weiteren Verfahrensschritt ein Materialkennwert betreffend die Szenerie, insbesondere betreffend eine untersuchte Oberfläche der Szenerie, durch einen Bediener spezifiziert. Ein Materialkennwert kann dabei insbesondere eine Substratstruktur (Rauigkeit, Porosität oder dergleichen), eine Substratsubstanz (Material wie Beton, Tapete oder dergleichen), einen pH-Wert des Substrats, oder dergleichen des auf Schimmelwachstumsgefahr hin zu untersuchenden Substrats (Oberfläche) charakterisieren. Auf diese Weise kann bei der Ermittlung der Information über die Schimmelbildungsgefahr eine Beschaffenheit der auf Schimmelbildungsgefahr zu untersuchenden Oberfläche in der Szenerie, d.h. des Schimmelwachstumssubstrats, besonders gut berücksichtigt werden. Insbesondere kann der Materialkennwert die biologische Eignung der Oberfläche, d.h. des Schimmelwachstumssubstrats, hinsichtlich Schimmelwachstum betreffen. Ein derartiger Materialkennwert kann beispielsweise die Rauheit, einen Verschmutzungsgrad, das Material, die chemische Zusammensetzung oder dergleichen der Oberfläche betreffen und somit den Nährboden für Schimmelwachstum charakterisieren. Das Spezifizieren kann dabei insbesondere durch eine Eingabe oder Auswahl durch einen Bediener, beispielsweise mittels einer Eingabevorrichtung oder mittels einer Menüauswahl oder dergleichen, erfolgen. Insbesondere kann der Materialkennwert manuell durch einen Bediener der Wärmebildkamera vorgebbar oder einstellbar sein. Dazu kann die Wärmebildkamera insbesondere eine Eingabevorrichtung aufweisen. Beispielsweise kann ein Materialkennwert aus einer Materialtabelle, die mögliche Materialien der Oberfläche sowie zugehörige Materialkennwerte verknüpft, auswählbar sein. Diese Tabelle kann beispielsweise in der Wärmebildkamera gespeichert sein oder über die Datenkommunikationsschnittstelle von einem externen Gerät wie beispielsweise einem Computer, einem Server oder dergleichen abrufbar sein. Der Materialkennwert wird insbesondere der Auswertevorrichtung bereitgestellt, die das erfindungsgemäße Verfahren durchführt. Insbesondere kann dieser Materialkennwert zur Auswertung der Information über eine Schimmelbildungsgefahr herangezogen werden und somit in das Schimmelwachstumsmodell einbezogen werden. Auf diese Weise kann eine besonders fundierte und präzise Berechnung der zweidimensionale Information über eine Schimmelbildungsgefahr erfolgen.

Alternativ oder zusätzlich kann der Materialkennwert auch automatisch einstellbar sein. Hierfür kann insbesondere auch ein Emissionsgrad der zu untersuchenden Oberfläche als Indikator verwendet werden, der beispielsweise durch einen Bediener einstellbar realisiert sein kann. Typischerweise deutet ein geringer Emissionsgrad, wie er beispielsweise bei Fliesen oder metallischen Oberflächen charakteristisch ist, auf einen schlechten Nährboden für Schimmelsporen. Im Gegensatz dazu deutet ein hoher Emissionsgrad, wie er beispielsweise bei Tapeten, Teppichen, Holz oder dergleichen charakteristisch ist, typischerweise auf einen guten Nährboden für Schimmelsporen. Auf diese Weise kann die Wärmebildkamera automatisch unter Heranziehung des vorgebbaren oder einstellbaren Emissionsgrads den Materialkennwert anpassen oder dem Bediener der Wärmebildkamera Hinweise auf mögliche Materialkennwerte, insbesondere zu dessen Auswahl, ausgeben.

In einer Ausführungsform des Verfahrens wird die zweidimensionale Information über eine Schimmelbildungsgefahr, insbesondere die Schimmelrisikokarte der Szenerie, mit der zweidimensionalen Temperaturinformation, insbesondere mit dem Wärmebild der Szenerie, überlagert auf einem Bildschirm der Wärmebildkamera ausgegeben. Entsprechend weist die Wärmebildkamera einen Bildschirm auf, mittels dem die zweidimensionale Information über eine Schimmelbildungsgefahr, insbesondere eine Schimmelrisikokarte der Szenerie, ausgegeben werden kann. Insbesondere kann die Information über eine Schimmelbildungsgefahr mit der zweidimensionalen Temperaturinformation, d.h. insbesondere mit dem Wärmebild, überlagert oder überblendet dargestellt und ausgegeben werden. Insbesondere ist unter der "Überlagerung" die Überlagerung, Überblendung, Kombination oder dergleichen zumindest der zweidimensionalen Temperaturinformation sowie der Information betreffend die Schimmelbildungsgefahr zu verstehen. Auf diese Weise kann eine kombinierte Darstellung in Form eines "integrierten Bildes" realisiert werden. Die kombinierte Darstellung ist dazu vorgesehen, mittels des Bildschirms an einen Bediener der Wärmebildkamera ausgegeben zu werden. Die überlagerte oder überblendete Darstellung stellt eine intuitiv besonders verständliche Interpretationshilfe und/oder Darstellungshilfe dar, die einem Bediener der Wärmebildkamera die Interpretation und Bewertung der mittels des Bildschirms dargestellten zweidimensionalen Temperaturinformation und der Information betreffend die Schimmelbildungsgefahr erleichtert. In einem Ausführungsbeispiel kann die zweidimensionale Temperaturinformation mittels einer Farbdarstellung (Heat-Map) wiedergegeben werden, während die zweidimensionale Information über eine Schimmelgefahr mittels einer Schraffur, einer Umrandung, einer farblichen Hervorhebung oder dergleichen überlagert und so auf dem Bildschirm dargestellt wird. Ferner ist denkbar, dass ein Zahlenwert oder ein Text auf dem Bildschirm eingeblendet wird, der einen Hinweis über die zweidimensionale Information über eine Schimmelbildungsgefahr an einen Bediener der Wärmebildkamera ausgibt.

In einer Ausführungsform des Verfahrens wird die zweidimensionale Information über eine Schimmelbildungsgefahr, insbesondere die Schimmelrisikokarte der Szenerie, mit einem mittels einer Kamera der Wärmebildkamera aufgenommenen visuellen Bild der Szenerie überlagert auf einem Bildschirm der Wärmebildkamera ausgegeben. Entsprechend weist die Wärmebildkamera in dieser Ausführungsform ebenfalls einen Bildschirm auf, mittels dem die zweidimensionale Information über eine Schimmelbildungsgefahr, insbesondere eine Schimmelrisikokarte der Szenerie, ausgegeben werden kann. Insbesondere kann die Information über eine Schimmelbildungsgefahr mit dem visuellen Bild überlagert oder überblendet dargestellt und ausgegeben werden. Auf diese Weise kann eine kombinierte Darstellung in Form eines "integrierten Bildes" realisiert werden. Die kombinierte Darstellung ist dazu vorgesehen, mittels des Bildschirms an einen Bediener der Wärmebildkamera ausgegeben zu werden. Die überlagerte oder überblendete Darstellung stellt eine intuitiv besonders verständliche Interpretationshilfe und/oder Darstellungshilfe dar, die einem Bediener der Wärmebildkamera die Interpretation und Bewertung der mittels des Bildschirms dargestellten Information betreffend die Schimmelbildungsgefahr erleichtert und insbesondere eine Zuordnung der Information betreffend die Schimmelbildungsgefahr zu realen Merkmalen der Szenerie erleichtert. In einem Ausführungsbeispiel kann die zweidimensionale Information betreffend die Schimmelbildungsgefahr mittels einer Farbdarstellung (Heat-Map) wiedergegeben werden, während das visuelle Bild als Konturen überlagert auf dem Bildschirm dargestellt wird.

Die Formulierung "darstellbar" macht deutlich, dass bei Betrieb der Wärmebildkamera die Information betreffend eine Schimmelbildungsgefahr auch tatsächlich dargestellt wird.

Unter Anwendung des erfindungsgemäßen Verfahrens wird es möglich, einem Bediener der Wärmebildkamera präzisere und belastbarere Informationen bzgl. eines Schimmelbildungsrisikos zu liefern und somit einen Bediener der Wärmebildkamera noch effektiver und zuverlässiger vor Schimmelbildung in Räumen und/oder an Wänden und/oder Oberflächen zu schützen.

Ferner wird ein System vorgeschlagen, das zumindest eine erfindungsgemäße Wärmebildkamera und zumindest eine externe Sensorik zur Bestimmung einer Umgebungsluftfeuchteinformation und/oder einer Umgebungslufttemperaturinformation umfasst.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine Ausführungsform einer erfindungsgemäßen Wärmebildkamera in einer perspektivischen Frontansicht,
- Figur 2: eine Ausführungsform einer erfindungsgemäßen Wärmebildkamera in einer perspektivischen Rückansicht,
- Figur 3: eine perspektivische, schematische Rückansicht einer Ausführungsform der erfindungsgemäßen Wärmebildkamera vor einer zu vermessenden Szenerie,
- Figur 4: System umfassend eine erfindungsgemäße Wärmebildkamera und eine zur Wärmebildkamera externe Sensorik,
- Figur 5: die wesentlichen Komponenten einer Ausführungsform der erfindungsgemäßen Wärmebildkamera,
- Figur 6: eine Ausführungsform des erfindungsgemäßen Verfahrens,
- Figur 7: schematische Wiedergabe einer Darstellung einer zweidimensionalen Information über eine Schimmelbildungsgefahr als Überlagerung mit einem visuellen Bild.

### Beschreibung der Ausführungsbeispiele

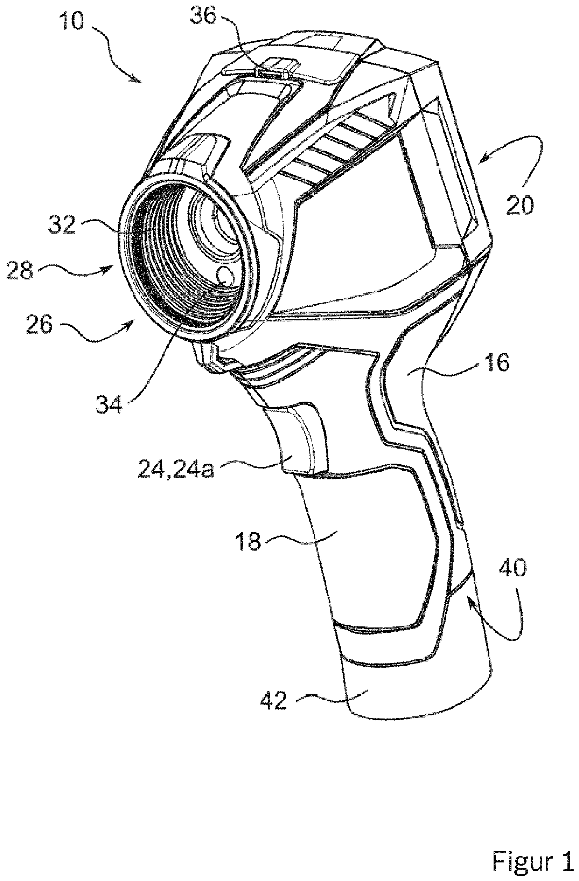

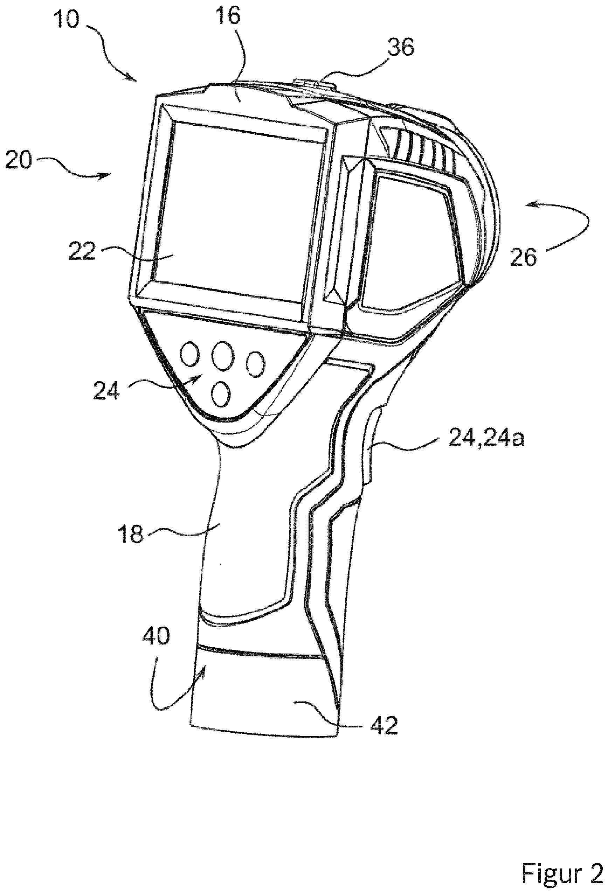

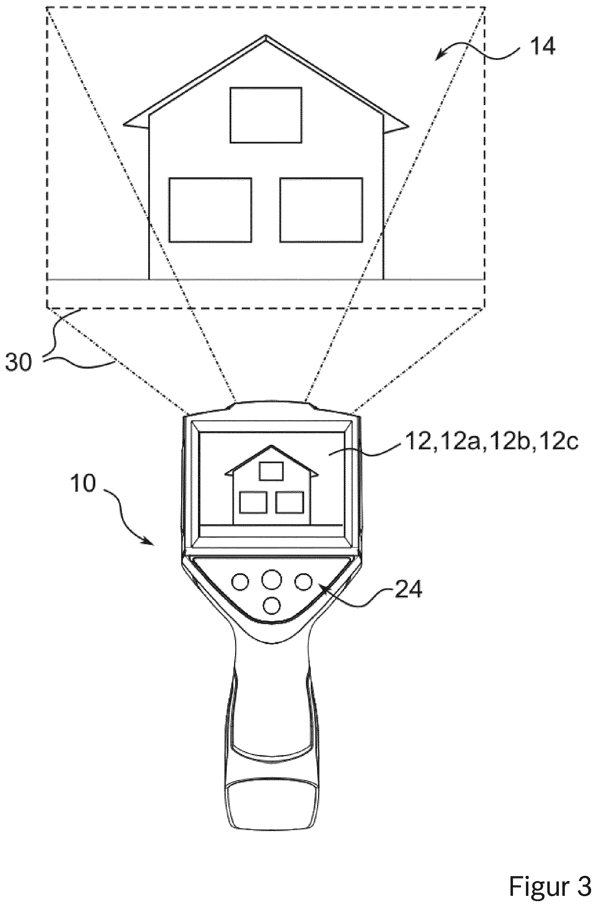

Im Folgenden wird eine erfindungsgemäße handgehaltene Wärmebildkamera 10 vorgestellt. Figur 1 und Figur 2 zeigen jeweils eine beispielhafte Ausführungsform dieser Wärmebildkamera 10 in perspektivischer Frontansicht bzw. in einer perspektivischen Rückansicht. Die Wärmebildkamera 10 dient dazu, eine zweidimensionale Temperaturinformation 12a, in diesem Ausführungsbeispiel ein Wärmebild, einer zu untersuchenden Szenerie 14 zu ermitteln. Die Szenerie 14 kann eine beliebige zu untersuchende Anordnung sein, die typischerweise Gegenstände, insbesondere Oberflächen von Gegenständen, oder dergleichen umfasst. Beispiele für eine derartige Szenerie 14 können eine Hausfassade (vgl. Figur 3), ein Innenraum oder dergleichen sein. Eine perspektivische, schematische Rückansicht einer erfindungsgemäßen Wärmebildkamera 10 vor einer exemplarisch zu vermessenden Szenerie 14 ist in Figur 3 dargestellt.

Die handgehaltene Wärmebildkamera 10 umfasst ein Gehäuse 16 mit einem Griff 18. Mit dem Griff 18 kann die Wärmebildkamera 10 während ihrer Benutzung bequem in einer Hand gehalten werden. Das Gehäuse 16 der Wärmebildkamera 10 weist weiterhin auf einer einem Bediener während der Benutzung der Wärmebildkamera 10 zugewandten Seite 20 eine Ausgabevorrichtung 22 in Form eines berührungssensitiven Bildschirms sowie eine Eingabevorrichtung 24 in Form von Bedienelementen zur Bedienereingabe und Steuerung der Wärmebildkamera 10 auf. Insbesondere weist die Wärmebildkamera 10 auch einen Taster 24a auf, mit dem ein Bediener die kontaktfreie Ermittlung einer zweidimensionalen Temperaturinformation 12a der zu untersuchenden Szenerie 14 sowie die kontaktfreie Ermittlung einer zweidimensionale Information 12b über eine Schimmelbildungsgefahr auslösen kann.

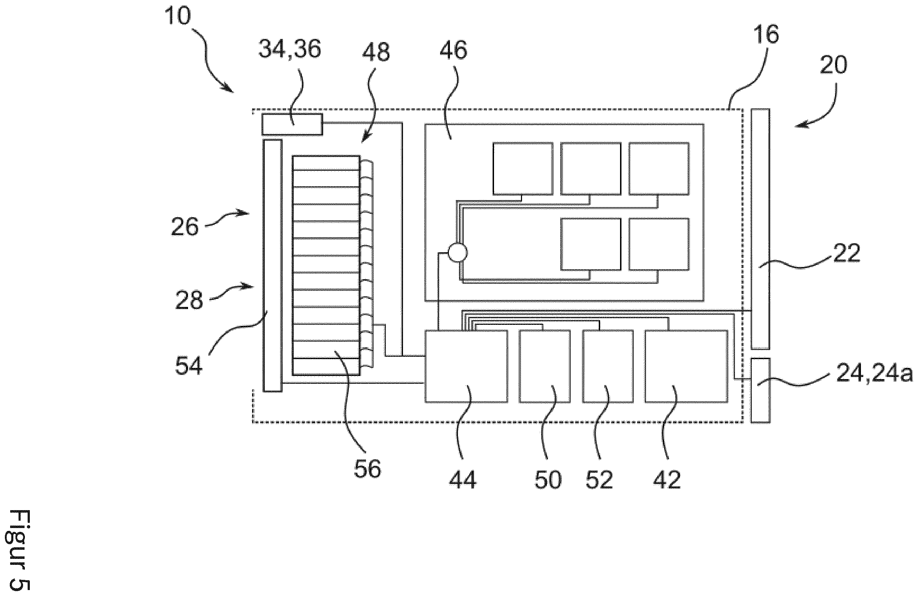

Auf der dem Bediener abgewandten Seite 26 des Gehäuses 16 ist eine Eintrittsöffnung 28 in dem Gehäuse 16 vorgesehen. Die Eintrittsöffnung 28 definiert (ggf. in Zusammenwirken mit einer hier nicht dargestellten Optik der Wärmebildkamera 10) den Erfassungsbereich der Wärmebildkamera 10, der in Figur 3 durch den Raumwinkelbereich 30 gestrichelt dargestellt ist. Die in diesem Raumwinkelbereich 30 oder in diesen Raumwinkelbereich 30 von der Szenerie 14, insbesondere von den Gegenständen der Szenerie 14, ausgestrahlte Infrarotstrahlung wird von der Wärmebildkamera 10 erfasst. Unmittelbar hinter der Eintrittsöffnung 28 befindet sich in einem Streulicht mindernden Lichttubus 32 ein Linsensystem als Optik (hier nicht näher dargestellt). Das Linsensystem ist für Strahlung im mittleren Infrarotbereich durchlässig und dient der Fokussierung von Infrarotstrahlung auf ein Infrarot-Detektorarray 48 (vgl. Figur 5) der Wärmebildkamera 10.

Auf der dem Bediener während der Benutzung der Wärmebildkamera 10 abgewandten Seite 26 des Gehäuses 16 befindet sich in dem Gehäuse 16 eine im visuellen Spektrum arbeitende Kamera 34 (vgl. Figur 3) zur Aufnahme von visuellen Bildern 12c. Derartige Bilder 12c können gemeinsam mit einem aus einer von dem Bediener durchgeführten Messung einer zweidimensionalen Temperaturinformation 12a und/oder gemeinsam mit einer zweidimensionale Information 12b über eine Schimmelbildungsgefahr ausgegeben werden, insbesondere zumindest teilweise mit der zweidimensionalen Temperaturinformation 12a bzw. mit der zweidimensionalen Information 12b über eine Schimmelbildungsgefahr überlagert oder überblendet ausgegeben werden. Ferner weist die Wärmebildkamera 10 eine an der Wärmebildkamera 10 angeordnete Sensorik 36 zur Bestimmung einer Umgebungsluftfeuchteinformation und einer Umgebungslufttemperaturinformation auf.

Auf der Unterseite der Wärmebildkamera 10 weist der Griff 18 ferner eine Aufnahme 40 zur Aufnahme eines Energiespeichers 42 auf, der beispielhaft in Form eines aufladbaren Akkumulators oder in Form von Batterien ausgeführt sein kann.

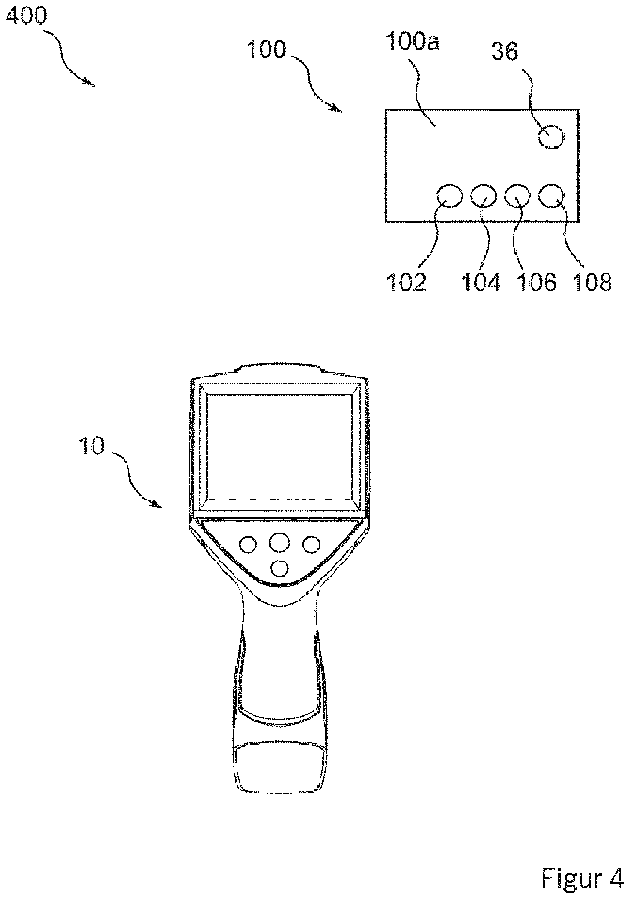

In einem alternativen Ausführungsbeispiel (vgl. Figur 4), kann die Sensorik 36 auch als zu der Wärmekamera 10 externe Sensorik 36 in einer Art Data-Logger 100 zur Bestimmung, insbesondere zur Messung, einer Umgebungsluftfeuchteinformation und/oder Umgebungslufttemperaturinformation realisiert sein, wobei die Umgebungsluftfeuchteinformation und/oder die Umgebungslufttemperaturinformation unter Verwendung der Datenkommunikationsschnittstelle 50 der Wärmebildkamera 10 an die Wärmebildkamera 10 übertragen wird. Die externe Sensorik 36 ist dabei in einem Sensorikgehäuse 100a untergebracht, das mittels eigener Energieversorgung 102, Steuervorrichtung 104, Speichervorrichtung 106 und Datenkommunikationsvorrichtung 108 eine Umgebungsluftfeuchteinformation und/oder eine Umgebungslufttemperaturinformation messen und übertragen kann. Die externe Sensorik 36, hier der Data-Logger 100, zur Bestimmung einer Umgebungsluftfeuchteinformation und einer Umgebungslufttemperaturinformation sowie die handgehaltene Wärmebildkamera 10 bilden derart ein erfindungsgemäßes System 400.

Wie in Figur 5 dargestellt, sind im Inneren der Wärmebildkamera 10, beispielsweise auf einer Leiterplatte, elektrische Bauteile der Wärmebildkamera 10 angebracht und verschaltet. Die elektrischen Bauteile umfassen zumindest die Sensorik 36, die visuelle Kamera 34, eine Steuervorrichtung 44, eine Auswertevorrichtung 46 sowie ein Infrarot-Detektorarray 48 zum Detektieren von in die Eintrittsöffnung 28 der Wärmebildkamera 10 eintretender Infrarotstrahlung. Die Steuervorrichtung 44 stellt insbesondere eine Vorrichtung dar, die zumindest eine Steuerelektronik sowie Mittel zur Kommunikation mit den anderen Komponenten der Wärmebildkamera 10 umfasst, insbesondere Mittel zur Steuerung und Regelung der Wärmebildkamera 10. Die Steuervorrichtung 44 ist mit den anderen Komponenten der Wärmebildkamera 10, insbesondere dem Infrarot-Detektorarray 48, der Auswertevorrichtung 46, einer Datenkommunikationsschnittstelle 50, dem Energiespeicher 42, einem Datenspeicher 52, ggf. einem Verschlussmechanismus 54 ("Shutter"), aber auch mit den Bedienelementen der Eingabevorrichtung 24,24a und dem berührungssensitiven Bildschirm der Ausgabevorrichtung 22 signaltechnisch verbunden.

Das Infrarot-Detektorarray 48 der Wärmebildkamera 10 besteht aus einer Vielzahl von für Infrarotstrahlung empfindlichen Pixeln 56. Die Pixel 56 sind dazu vorgesehen, Infrarotstrahlung aus dem infraroten Strahlungsspektrum, die in dem Raumwinkelbereich 30 ausgehend von der zu untersuchenden Szenerie 14 in die Eintrittsöffnung 28 der Wärmebildkamera 10 eintritt (vgl. Figur 3), zu erfassen. Jedes Pixel 56 ist dazu vorgesehen, ein elektrisches Detektionssignal an seinem Ausgang bereitzustellen, dass mit der eingestrahlten Wärmeleistung der Infrarotstrahlung auf das Pixel 56 korreliert. Diese Pixel-abhängigen Detektionssignale werden einzeln oder in Kombination mit anderen Detektionssignalen anderer Pixel 56 zunächst an die Steuervorrichtung 44 der Wärmebildkamera ausgegeben und von dieser an die Auswertevorrichtung 46 der Wärmebildkamera 10 weitergeleitet. In dem dargestellten Ausführungsbeispiel sind die Pixel 56 als Infrarotstrahlungs-empfindliche p/n-Dioden realisiert. Vorteilhaft sind die Pixel 56 des Infrarot-Detektorarrays 48 Matrix-artig an der der Szenerie zugewandten Oberfläche des Infrarot-Detektorarrays 48 angeordnet. Die Anzahl von Pixeln 56 beträgt in dem dargestellten Ausführungsbeispiel insbesondere 80×80 Pixel, bevorzugt 360x240 Pixel, besonders bevorzugt 640×480 Pixel.

Die Steuervorrichtung 44 dient dem Empfangen und Auswerten von Detektionssignalen des Infrarot-Detektorarrays 48, wobei die Steuervorrichtung 44 basierend auf Detektionssignalen zumindest einer Mehrzahl von mit Infrarotstrahlung beleuchteten Pixeln 56 eine Auswertung der zweidimensionalen Temperaturinformation 12a, insbesondere des Wärmebilds, der untersuchten Szenerie 14 durchführt. Die Steuervorrichtung 44 weist zumindest einen Prozessor, einen Speicher und ein Betriebsprogramm mit Auswerte- und Berechnungsroutinen auf (in Figur 5 jeweils nicht näher gekennzeichnet). Die ausgewertete zweidimensionale Temperaturinformation 12a, insbesondere das erzeugte Wärmebild, kann von der Steuervorrichtung 44 zur weiteren Verarbeitung und/oder zur Ausgabe einem Bediener der Wärmebildkamera 10 mittels der Ausgabevorrichtung 22 und/oder einem externen Gerät mittels der Datenkommunikationsschnittstelle 50 bereitgestellt werden.

Die Auswertevorrichtung 46 dient dem Empfangen und Auswerten von von der Sensorik 36 bereitgestellten Messwerten zur Umgebungsluftfeuchte und Umgebungslufttemperatur, wobei eine Umgebungsluftfeuchteinformation und eine Umgebungslufttemperaturinformation ermittelt werden. Ferner dient die Auswertevorrichtung 46 der Durchführung des erfindungsgemäßen Verfahrens, insbesondere der Berechnung einer zweidimensionalen Information 12b über eine Schimmelbildungsgefahr, insbesondere einer Schimmelrisikokarte der Szenerie 14, unter Verwendung eines Schimmelwachstumsmodells sowie unter Verwendung der zweidimensionalen Temperaturinformation 12a, der Umgebungsluftfeuchteinformation und der Umgebungslufttemperaturinformation.

Im Folgenden wird das erfindungsgemäße Verfahren an einem Ausführungsbeispiel erläutert, das von dem Messszenario der Figur 3 ausgeht, in dem ein Bediener der Wärmebildkamera 10 an einer Untersuchung einer Schimmelbildungsgefahr der Szenerie 14 interessiert ist. Dabei dient die Wärmebildkamera 10 der Erfassung einer zweidimensionalen Temperaturinformation 12a der zu untersuchenden Szenerie 14. Die ermittelte zweidimensionale Temperaturinformation 12a ist aus einer Vielzahl von ortsaufgelösten und/oder raumwinkelaufgelösten Temperaturmesswerten zusammengesetzt (entsprechend Pixeln eines anzeigbaren Wärmebilds). Die Wärmebildkamera 10 ist dazu eingerichtet, zur kontaktfreien Ermittlung der zweidimensionalen Temperaturinformation 12a der Szenerie 14 aus oder in dem Raumwinkelbereich 30 abgestrahlte Infrarotstrahlung zu detektieren.

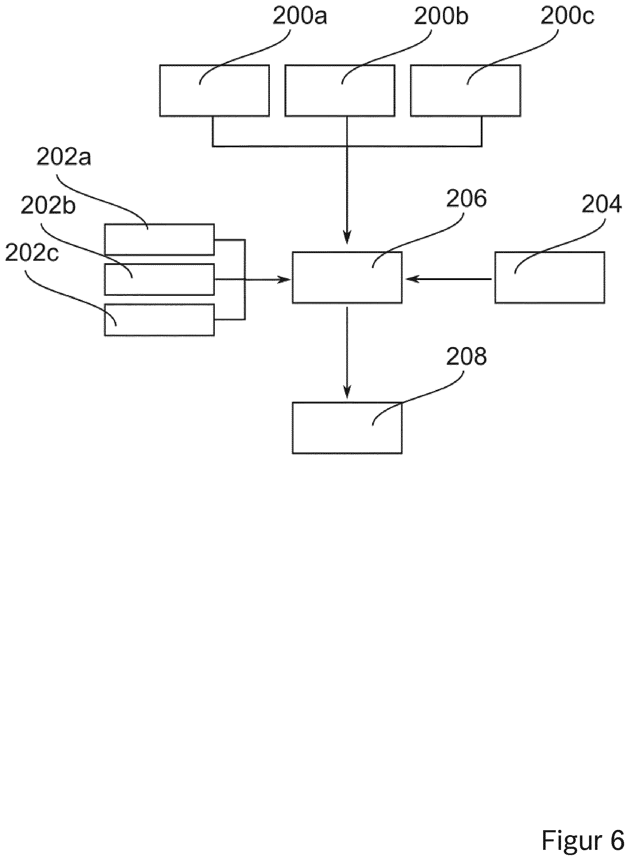

In Figur 6 ist ein Verfahrensdiagramm dargestellt, das eine Ausführungsform des erfindungsgemäßen Verfahrens zum Betrieb der Wärmebildkamera 10 wiedergibt. Das Verfahren ist dazu vorgesehen, von einer Wärmebildkamera 10 durchgeführt zu werden, wie sie im Zusammenhang mit den Figuren 1 bis 5 vorgestellt wird.

Ausgehend von dem in Figur 3 dargestellten Messszenario richtet der Bediener der Wärmebildkamera 10 zur Vermessung der Szenerie 14 die Wärmebildkamera 10 auf die zu untersuchende Szenerie 14. In einem ersten Verfahrensschritt 200 wird der Wärmebildkamera 10 eine Umgebungsluftfeuchteinformation und eine Umgebungslufttemperaturinformation bereitgestellt. Die Bereitstellung kann durch einen Bediener der Wärmebildkamera 10 erfolgen (Verfahrensschritt 200a), der die Umgebungsluftfeuchteinformation und/oder die Umgebungslufttemperaturinformation direkt mittels der Eingabevorrichtung 24 eingibt (beispielsweise als Zahlenwerte). Alternativ oder zusätzlich kann die Bereitstellung der Umgebungsluftfeuchteinformation und/oder der Umgebungslufttemperaturinformation mittels der an der Wärmebildkamera 10 angeordneten Sensorik 36 (vgl. Figur 1) durch Messen erfolgen

(Verfahrensschritt 200b). Alternativ oder zusätzlich kann die Bereitstellung der Umgebungsluftfeuchteinformation und/oder der Umgebungslufttemperaturinformation mittels einer zu der Wärmebildkamera 10 externen Sensorik 36 (vgl. Figur 4) durch Messen und anschließendes Übertragen unter Verwendung der Datenkommunikationsschnittstelle 50 der Wärmebildkamera 10 erfolgen (Verfahrensschritt 200c). Insbesondere kann dabei die Umgebungsluftfeuchteinformation und/oder die Umgebungslufttemperaturinformation aus einer Langzeitmessung der Umgebungsluftfeuchte und/oder der Umgebungslufttemperatur ermittelt und bereitgestellt werden (betrifft Verfahrensschritte 200b bzw. 200c).

In Verfahrensschritt 202a spezifiziert ein Bediener der Wärmebildkamera 10 das anzuwendende Schimmelwachstumsmodell , insbesondere durch Auswahl mittels der Eingabevorrichtung 24. In Verfahrensschritt 202b kann ein Bediener der Wärmebildkamera 10 eine Schimmelwarnschwelle spezifizieren, ebenfalls unter Verwendung der Eingabevorrichtung 24. Ferner kann ein Bediener der Wärmebildkamera 10 in Verfahrensschritt 202c einen Materialkennwert der Szenerie 14 spezifizieren, beispielsweise ein Substratmaterial.

In Verfahrensschritt 204 misst die Wärmebildkamera 10 mittels des Infrarot-Detektorarrays 48 Infrarotstrahlung aus dem Raumwinkelbereich 30. Die jeweiligen Detektionssignale des Infrarot-Detektorarrays 48 werden dabei an die Steuervorrichtung 44 weitergeleitet, von der sie ausgewertet werden und anschließend zur weiteren Verarbeitung zur Verfügung stehen. Insbesondere wird derart eine zweidimensionale Temperaturinformation 12a, insbesondere ein Wärmebild, ermittelt. Parallel dazu ermittelt die Wärmebildkamera 10 unter Verwendung der Kamera 34 ein visuelles Bild 12c der Szenerie 14.

Zumindest die Eingangsgrößen der zweidimensionalen Temperaturinformation 12a, der Umgebungsluftfeuchteinformation und der Umgebungslufttemperaturinformation werden unter Verwendung des spezifizierten Schimmelwachstumsmodells zu einer zweidimensionalen Information 12b über eine Schimmelbildungsgefahr, insbesondere eine Schimmelrisikokarte der Szenerie 14, in Verfahrensschritt 206 umgerechnet und ausgewertet.

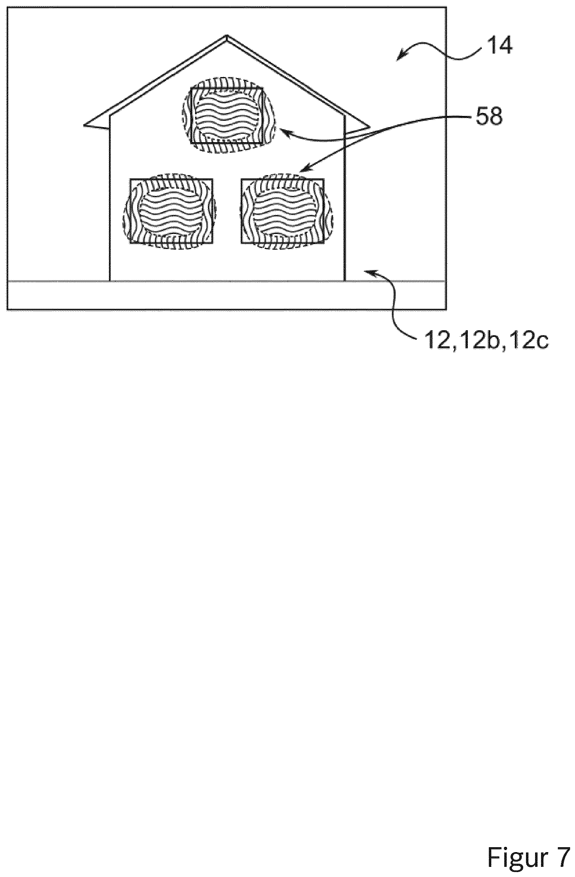

Die ermittelte zweidimensionale Information 12b über eine Schimmelbildungsgefahr wird in Verfahrensschritt 208 über den Bildschirm der Ausgabevorrichtung 22 an den Bediener der Wärmebildkamera 10 ausgegeben. Dabei kann die Ausgabe der zweidimensionalen Information 12b über eine Schimmelbildungsgefahr mit der zweidimensionalen Temperaturinformation 12a, insbesondere mit dem Wärmebild der Szenerie 14, überlagert erfolgen. Alternativ kann die Ausgabe der zweidimensionale Information 12b über eine Schimmelbildungsgefahr auch mit dem mittels der Kamera 34 der Wärmebildkamera 10 aufgenommenen visuellen Bild 12c der Szenerie 14 überlagert erfolgen (vgl. Insbesondere Figur 7).

Es sei angemerkt, dass diese Verfahrensschritte wiederholt ablaufen können. Durch eine schnelle Wiederholrate der Verfahrensschritte 200 bis 208 erscheint die dem Bediener auf dem Bildschirm der Ausgabevorrichtung 22 ausgegeben Auswerteergebnisse 12 wie ein kontinuierlich aktualisiertes Bild, insbesondere wie ein "Live-Modus" der Szenerie 14.

Nach Betätigen eines Bedienelements der Eingabevorrichtung 24, insbesondere des Tasters 24a, kann vorgesehen sein, dass die Wärmebildkamera 10 das zuletzt ermittelte und angezeigte Auswerteergebnis 12 einfriert, sodass, auch bei weiterer Bewegung der Wärmebildkamera 10 im Raum, keine Aktualisierung der auf dem Bildschirm dargestellten Auswerteergebnisse 12 mehr erfolgt. Gleichzeitig oder anschließend kann vorgesehen sein, entsprechend einer durch den Bediener spezifizierten Schimmelwarnschwelle die Auswertung und/oder die Ausgabe der zweidimensionalen Information 12b über die Schimmelbildungsgefahr auf solche Bereiche 58 der Szenerie 14 zu beschränken, für die eine Schimmelbildungsgefahr oberhalb der definierten Schimmelwarnschwelle liegt.

In Figur 7 ist eine mittels der Wärmebildkamera 10 untersuchte Szenerie 14 schematische dargestellt, wie sie mittels der Ausgabevorrichtung 22 der Wärmebildkamera 10 an einen Bediener ausgegeben wird. Die ausgegebene Darstellung ist realisiert als eine Überlagerung der zweidimensionale Information 12b über eine Schimmelbildungsgefahr, insbesondere die Schimmelrisikokarte der Szenerie 14, mit einem mittels der Kamera 34 der Wärmebildkamera 10 aufgenommenen visuellen Bild 12c der Szenerie 14. Dabei werden die Bereiche 58 erhöhten Schimmelrisikos farblich dargestellt, hier als Schraffur wiedergegeben. Die Szenerie 14 besteht beispielhaft aus einer Hausfassade, die untersucht werden soll. Die Wärmebildkamera 10 ist, wie auch in Figur 3 dargestellt, derart vor der Szenerie 14 positioniert, dass die gesamte Hausfassade von dem Raumwinkelbereich 30 abgedeckt wird, sodass aus gemessener Infrarotstrahlung (Verfahrensschritt 204 in Figur 6) der Hausfassade eine die Hausfassade komplett charakterisierende zweidimensionale Information über eine Schimmelbildungsgefahr 12b ermittelt werden kann (Verfahrensschritt 206 in Figur 6). Dabei ist die Darstellung der zweidimensionalen Information über die Schimmelbildungsgefahr unter Berücksichtigung der Schimmelwarnschwelle derart reduziert, dass nur die risikoreichsten Bereiche 58 in der überlagerten Darstellung ausgegeben werden. Die Bereiche, für die eine geringe Schimmelbildungsgefahr ermittelt wird, werden in der Darstellung weggelassen.

## Patentansprüche

1. Verfahren zum Betrieb einer Wärmebildkamera (10), aufweisend zumindest folgende Verfahrensschritte:
• Messen einer zweidimensionalen Temperaturinformation (12a), insbesondere eines Wärmebilds einer Szenerie (14), mittels eines Infrarot-Detektorarrays (48) der Wärmebildkamera (10), das aus einer Vielzahl von für Infrarotstrahlung empfindlichen Pixeln (56) besteht (Verfahrensschritt 204),
• Bereitstellen einer Umgebungsluftfeuchteinformation und/oder einer Umgebungslufttemperaturinformation (Verfahrensschritt 200a, 200b, 200c),
**dadurch gekennzeichnet, dass** mittels einer Auswertevorrichtung (46) eine zweidimensionale Information (12b) über eine Schimmelbildungsgefahr, insbesondere eine Schimmelrisikokarte der Szenerie (14), unter Verwendung eines Schimmelwachstumsmodells sowie unter Verwendung der zweidimensionalen Temperaturinformation (12a), der Umgebungsluftfeuchteinformation und der Umgebungslufttemperaturinformation berechnet wird (Verfahrensschritt 206), wobei in einem weiteren Verfahrensschritt (Verfahrensschritt 202a) das Schimmelwachstumsmodell durch einen Bediener spezifiziert wird.

2. Verfahren nach einem der vorhergehenden Ansprüche, **dadurch gekennzeichnet, dass** in einem weiteren Verfahrensschritt (Verfahrensschritt 202b) eine Schimmelwarnschwelle durch einen Bediener spezifiziert wird.

3. Verfahren nach einem der vorhergehenden Ansprüche, **dadurch gekennzeichnet, dass** die Umgebungsluftfeuchteinformation und/oder die Umgebungslufttemperaturinformation durch einen Bediener bereitgestellt wird (Verfahrensschritt 200a).

4. Verfahren nach einem der vorhergehenden Ansprüche, **dadurch gekennzeichnet, dass** die Umgebungsluftfeuchteinformation und/oder die Umgebungslufttemperaturinformation mittels einer in die oder an der Wärmebildkamera (10) angeordneten Sensorik (36) zur Bestimmung einer Umgebungsluftfeuchteinformation und/oder einer Umgebungslufttemperaturinformation bereitgestellt wird, insbesondere gemessen wird (Verfahrensschritt 200b).

5. Verfahren nach einem der vorhergehenden Ansprüche, **dadurch gekennzeichnet, dass** die Umgebungsluftfeuchteinformation und/oder die Umgebungslufttemperaturinformation mittels einer zu der Wärmebildkamera (10) externen Sensorik (36) zur Bestimmung einer Umgebungsluftfeuchteinformation und/oder die Umgebungslufttemperaturinformation bereitgestellt wird, insbesondere gemessen und übertragen wird (Verfahrensschritt 200c).

6. Verfahren nach einem der vorhergehenden Ansprüche, **dadurch gekennzeichnet, dass** die Umgebungsluftfeuchteinformation und/oder die Umgebungslufttemperaturinformation aus einer Langzeitmessung der Umgebungsluftfeuchte und/oder der Umgebungslufttemperatur ermittelt und bereitgestellt wird.

7. Verfahren nach einem der vorhergehenden Ansprüche, **dadurch gekennzeichnet, dass** in einem weiteren Verfahrensschritt (Verfahrensschritt 202c) ein Materialkennwert der Szenerie durch einen Bediener spezifiziert wird.

8. Verfahren nach einem der vorhergehenden Ansprüche, **dadurch gekennzeichnet, dass** die zweidimensionale Information (12b) über eine Schimmelbildungsgefahr, insbesondere die Schimmelrisikokarte der Szenerie (14), mit der zweidimensionalen Temperaturinformation (12a), insbesondere mit dem Wärmebild der Szenerie (14), überlagert auf einem Bildschirm der Wärmebildkamera (10) ausgegeben wird.

9. Verfahren nach einem der vorhergehenden Ansprüche, **dadurch gekennzeichnet, dass** die zweidimensionale Information (12b) über eine Schimmelbildungsgefahr, insbesondere die Schimmelrisikokarte der Szenerie (14), mit einem mittels einer Kamera (34) der Wärmebildkamera (10) aufgenommenen visuellen Bild (12c) der Szenerie (14) überlagert auf einem Bildschirm der Wärmebildkamera (10) ausgegeben wird.

10. Handgehaltene Wärmebildkamera (10) zur kontaktfreien Ermittlung einer zweidimensionalen Information (12b) über eine Schimmelbildungsgefahr, insbesondere einer Schimmelrisikokarte einer Szenerie, aufweisend zumindest ein Infrarot-Detektorarray (48), das aus einer Vielzahl von für Infrarotstrahlung empfindlichen Pixeln (56) besteht, **gekennzeichnet durch** eine Auswertevorrichtung (46) zur Durchführung eines Verfahrens nach einem der Ansprüche 1 bis 9.

11. Handgehaltene Wärmebildkamera (10) nach Anspruch 10, **gekennzeichnet durch** eine in die oder an der Wärmebildkamera (10) angeordnete Sensorik (36) zur Bestimmung einer Umgebungsluftfeuchteinformation und/oder einer Umgebungslufttemperaturinformation.

12. Handgehaltene Wärmebildkamera (10) nach Anspruch 10 oder 11, **gekennzeichnet durch** eine Datenkommunikationsschnittstelle (50) zur Übertagung von zumindest einer Umgebungsluftfeuchteinformation und/oder einer Umgebungslufttemperaturinformation von einer zu der Wärmebildkamera (10) externen Sensorik (36).

13. System (400) aufweisend zumindest eine handgehaltene Wärmebildkamera (10) gemäß einem der Ansprüche 10 bis 12 und eine zu der Wärmebildkamera (10) externe Sensorik (36) zur Bestimmung einer Umgebungsluftfeuchteinformation und/oder einer Umgebungslufttemperaturinformation.

## Claims

1. Method for operating a thermal imaging camera (10), including at least the following method steps:
• measuring two-dimensional temperature information (12a), in particular a thermal image of a setting (14), by means of an infrared detector array (48) of the thermal imaging camera (10), which consists of a plurality of pixels (56) sensitive to infrared radiation (method step 204),
• providing ambient humidity information and/or ambient air temperature information (method step 200a, 200b, 200c),
**characterized in that,** by means of an evaluation device (46), two-dimensional information (12b) about a mold formation risk, in particular a mold risk map of the setting (14), is calculated using a mold growth model and using the two-dimensional temperature information (12a), the ambient humidity information, and the ambient air temperature information (method step 206), wherein, in a further method step (method step 202a), the mold growth model is specified by an operator.

2. Method according to any one of the preceding claims, **characterized in that,** in a further method step (method step 202b), a mold warning threshold is specified by an operator.

3. Method according to either one of the preceding claims, **characterized in that** the ambient humidity information and/or the ambient air temperature information is provided by an operator (method step 200a) .

4. Method according to any one of the preceding claims, **characterized in that** the ambient humidity information and/or the ambient air temperature information is provided, in particular is measured, by means of a sensor system (36), arranged in the or on the thermal imaging camera (10), for determining ambient humidity information and/or ambient air temperature information (method step 200b) .

5. Method according to any one of the preceding claims, **characterized in that** the ambient humidity information and/or the ambient air temperature information is provided, in particular is measured and transmitted, by means of a sensor system (36), which is external to the thermal imaging camera (10), for determining ambient humidity information and/or the ambient air temperature information (method step 200c) .

6. Method according to any one of the preceding claims, **characterized in that** the ambient humidity information and/or the ambient air temperature information is determined and provided from a long-term measurement of the ambient humidity and/or the ambient air temperature.

7. Method according to any one of the preceding claims, **characterized in that,** in a further method step (method step 202c), a material characteristic value of the setting is specified by an operator.

8. Method according to any one of the preceding claims, **characterized in that** the two-dimensional information (12b) about a mold formation risk, in particular the mold risk map of the setting (14), is output on a display screen of the thermal imaging camera (10) overlaid with the two-dimensional temperature information (12a), in particular with the thermal image of the setting (14).

9. Method according to any one of the preceding claims, **characterized in that** the two-dimensional information (12b) about a mold formation risk, in particular the mold risk map of the setting (14), is output on a display screen of the thermal imaging camera (10) overlaid with a visual image (12c) of the setting (14) recorded by means of a camera (34) of the thermal imaging camera (10).

10. Handheld thermal imaging camera (10) for contactless determination of two-dimensional information (12b) about a mold formation risk, in particular a mold risk map of a setting, including at least one infrared detector array (48), which consists of a plurality of pixels (56) sensitive to infrared radiation, **characterized by** an evaluation device (46) for carrying out a method according to any one of Claims 1 to 9.

11. Handheld thermal imaging camera (10) according to Claim 10, **characterized by** a sensor system (36), arranged in the or on the thermal imaging camera (10), for determining ambient humidity information and/or ambient air temperature information.

12. Handheld thermal imaging camera (10) according to Claim 10 or 11, **characterized by** a data communication interface (50) for transmitting at least one item of ambient humidity information and/or one item of ambient air temperature information from a sensor system (36) which is external to the thermal imaging camera (10).

13. System (400) including at least one handheld thermal imaging camera (10) according to any one of Claims 10 to 12 and a sensor system (36), which is external to the thermal imaging camera (10), for determining ambient humidity information and/or ambient air temperature information.

## Revendications

1. Procédé permettant de faire fonctionner une caméra thermique (10), présentant au moins les étapes de procédé suivantes consistant à :
• mesurer une information de température bidimensionnelle (12a), en particulier une image thermique d'une scène (14), au moyen d'un réseau de détecteurs infrarouges (48) de la caméra thermique (10), qui est composé d'une pluralité de pixels (56) sensibles au rayonnement infrarouge (étape de procédé 204),
• fournir une information d'humidité de l'air ambiant et/ou une information de température de l'air ambiant (étapes de procédé 200a, 200b, 200c),
**caractérisé en ce qu'**au moyen d'un dispositif d'évaluation (46), une information bidimensionnelle (12b) concernant un danger de formation de moisissures, en particulier une carte de risque de moisissures de la scène (14), est calculée en utilisant un modèle de croissance de moisissures ainsi qu'en utilisant l'information de température bidimensionnelle (12a), l'information d'humidité de l'air ambiant et l'information de température de l'air ambiant (étape de procédé 206), dans lequel, dans une étape de procédé supplémentaire (étape de procédé 202a), le modèle de croissance de moisissures est spécifié par un utilisateur.

2. Procédé selon l'une quelconque des revendications précédentes, **caractérisé en ce que** dans une étape de procédé supplémentaire (étape de procédé 202b), un seuil d'avertissement de moisissures est spécifié par un utilisateur.

3. Procédé selon l'une quelconque des revendications précédentes, **caractérisé en ce que** l'information d'humidité de l'air ambiant et/ou l'information de température de l'air ambiant est/sont fournie(s) par un utilisateur (étape de procédé 200a).

4. Procédé selon l'une quelconque des revendications précédentes, **caractérisé en ce que** l'information d'humidité de l'air ambiant et/ou l'information de température de l'air ambiant est/sont fournie(s), en particulier mesurée(s) (étape de procédé 200b), au moyen d'un système de capteurs (36) disposé dans ou sur la caméra thermique (10) pour déterminer une information d'humidité de l'air ambiant et/ou une information de température de l'air ambiant.

5. Procédé selon l'une quelconque des revendications précédentes, **caractérisé en ce que** l'information d'humidité de l'air ambiant et/ou l'information de température de l'air ambiant est/sont fournie(s), en particulier mesurée(s) et transmise(s) (étape de procédé 200c), au moyen d'un système de capteurs (36) externe à la caméra thermique (10) pour déterminer une information d'humidité de l'air ambiant et/ou l'information de température de l'air ambiant.

6. Procédé selon l'une quelconque des revendications précédentes, **caractérisé en ce que** l'information d'humidité de l'air ambiant et/ou l'information de température de l'air ambiant est/sont établiée(s) et fournie(s) selon une mesure à long terme de l'humidité de l'air ambiant et/ou de la température de l'air ambiant.

7. Procédé selon l'une quelconque des revendications précédentes, **caractérisé en ce que** dans une étape de procédé supplémentaire (étape de procédé 202c), une valeur caractéristique matérielle de la scène est spécifiée par un utilisateur.

8. Procédé selon l'une quelconque des revendications précédentes, **caractérisé en ce que** l'information bidimensionnelle (12b) concernant un danger de formation de moisissures, en particulier la carte de risque de moisissures de la scène (14), est sortie sur un écran de la caméra thermique (10) en superposition avec l'information de température bidimensionnelle (12a), en particulier avec l'image thermique de la scène (14).

9. Procédé selon l'une quelconque des revendications précédentes, **caractérisé en ce que** l'information bidimensionnelle (12b) concernant un danger de formation de moisissures, en particulier la carte de risque de moisissures de la scène (14), est sortie sur un écran de la caméra thermique (10) en superposition avec une image visuelle (12c) de la scène (14), enregistrée au moyen d'une caméra (34) de la caméra thermique (10).

10. Caméra thermique à main (10) permettant d'établir sans contact une information bidimensionnelle (12b) concernant un risque de formation de moisissures, en particulier une carte de risque de moisissures d'une scène, présentant au moins réseau de détecteurs infrarouges (48), qui est composé d'une pluralité de pixels (56) sensibles au rayonnement infrarouge, **caractérisée par** un dispositif d'évaluation (46) pour exécuter un procédé selon l'une quelconque des revendications 1 à 9.

11. Caméra thermique à main (10) selon la revendication 10, **caractérisée par** un système de capteurs (36) disposé dans ou sur la caméra thermique (10) pour déterminer une information d'humidité de l'air ambiant et/ou une information de température de l'air ambiant.

12. Caméra thermique à main (10) selon la revendication 10 ou 11, **caractérisée par** une interface de communication de données (50) pour transmettre au moins une information d'humidité de l'air ambiant et/ou une information de température de l'air ambiant provenant d'un système de capteurs (36) externe à la caméra thermique (10).

13. Système (400), présentant au moins une caméra thermique (10) à main selon l'une quelconque des revendications 10 à 12 et un système de capteurs (36) externe à la caméra thermique (10) pour déterminer une information d'humidité de l'air ambiant et/ou une information de température de l'air ambiant.
